# EUROPÄISCHE PATENTSCHRIFT

(11) **EP 0 670 963 B1**
(45) Veröffentlichungstag und Bekanntmachung des Hinweises auf die Patenterteilung: **05.06.1996**
(21) Anmeldenummer: 94924748.0
(22) Anmeldetag: 07.07.1994
(51) Int. Cl.: F03G 7/00, H01M 10/34

(54) **ELEKTROCHEMISCHER AKTOR**
ELECTROCHEMICAL ACTUATOR
ACTEUR ELECTROCHIMIQUE

(30) Priorität: 18.09.1993 DE 4331763
(43) Veröffentlichungstag der Anmeldung: 13.09.1995
(73) Patentinhaber: FRIWO SILBERKRAFT GESELLSCHAFT FÜR BATTERIETECHNIK MBH, D-47058 Duisburg (DE)
(72) Erfinder: BAUER, Helmut, D-47057 Duisburg (DE); DERISAVI-FARD, Foad, D-47259 Duisburg (DE); ECKOLDT, Uwe, D-47199 Duisburg (DE); GEHRMANN, Ralf, D-47269 Duisburg (DE); KICKEL, Heribert, D-47638 Straelen (DE)
(74) Vertreter: Ackmann, Günther
(86) Internationale Anmeldenummer: EP9402289
(87) Internationale Veröffentlichungsnummer: WO9508709

(56) Entgegenhaltungen:
- WO-A-85/04287
- DE-C- 4 116 739
- US-A- 4 159 367
- US-A- 4 565 749
- PROCEEDINGS OF THE 20TH INTERSOCIETY ENERGY CONVERSION ENGINEERING CONFERENCE, Bd.1, 1. August 1985, WARRENDALE US Seiten 1339 - 1345 KOEHLER 'Bipolar Nickel-Hydrogen Battery Development'

## Beschreibung

Die Erfindung betrifft einen dem Oberbegriff des Anspruches 1 entsprechenden elektrochemischen Aktor.

Bei dem aus der DE 41 16 739 C1 bekannten elektrochemischen Aktor sind in einem Gehäuse elektrochemische Zellen stapelförmig angeordnet, die bei Anlegen einer Gleichspannung je nach der gewählten Stromrichtung Gas erzeugen oder verzehren, so daß ein mit den Zellen verbundenes Balgorgan durch den Gasdruck ausgedehnt oder zurückbewegt wird. Jede Zelle des Stapels besteht aus einer Feststoffelektrode, einem Separator und einer Gegenelektrode. Die Gegenelektrode aus Kohle ist mehrschichtig aufgebaut und weist eine wasserabweisende Kohleschicht auf, um zu verhindern, daß der Elektrolyt bis zu der aus Graphitpapier bestehenden Rückschicht vordringt. Der Zellenstapel ist aus den einzelnen Elektroden und Separatoren zusammengebaut und in einer Isolierhülle angeordnet. Sowohl der mehrschichtige Aufbau der Gegenelektrode als auch die Art der Stapelbauweise sind aufwendig und teuer. Weiterhin hat die vorbekannte Ausführung den Nachteil, daß die entstehende Wärme nicht ausreichend aus den Zellen abgeleitet und dadurch die Haltbarkeit und Funktionsfähigkeit beeinträchtigt wird.

Der Erfindung liegt das Problem zugrunde, einen dem Oberbegriff des Anspruches 1 entsprechenden elektrochemischen Aktor derart auszubilden, daß eine vereinfachte, preiswerte Herstellung möglich und dessen Haltbarkeit und Funktionsfähigkeit verbessert ist.

Diese Aufgabe wird durch die kennzeichnenden Merkmale des Anspruches 1 gelöst.

Die Zuordnung eines stapelbaren Abstandhalters hat zunächst den Vorteil, daß die Zellen schnell und einfach zusammengebaut und gestapelt werden können, wobei in dem vom Abstandhalter eingefaßten Zellenbecher zunächst eine Matrix für den Elektrolyt eingelegt wird und darauf die weiteren Zellenbauteile, nämlich eine Festkörperelektrode, ein Separator und eine Gegenelektrode gelegt werden. Die zusammengebauten Zellen werden zur Stapelung aufeinandergelegt, wobei die Gegenelektrode aus dem Abstandhalter etwas herausragen kann, in den Abstandhalter einer benachbarten Zelle eingreift und gegen deren Zellenbecher dicht anliegt. Die Bauweise verhindert ein seitliches Verrutschen der Zellen im Stapel.

Der aus einem elektrisch isolierenden Werkstoff bestehende Abstandhalter mit dem eingefaßten Zellenbecher verhindert weitgehend Kriechströme zwischen den Zellen, und durch die gute Wärmeleitfähigkeit des Abstandhalters wird die entstehende Wärme der Zellen gut abgeleitet. Es gibt verschiedene Stoffe oder Stoffmischungen, die diese Eigenschaften haben. Beispielsweise kann der Abstandhalter durch Spritzguß aus einer Kunststoffmasse hergestellt sein, die einen gut wärmeleitenden, elektrisch isolierenden, pulverförmigen Zusatzstoff enthält. Als Zusatzstoff ist beispielsweise Aluminiumoxid, Titanoxid oder Quarz geeignet. In Betracht kommen aber auch Abstandhalter aus oxidkeramischen Werkstoffen.

Der Abstandhalter ist zweckmäßig mit Ausschnitten versehen, welche die gasbildende bzw. gasverzehrende Gegenelektrode der Zelle mit dem abgeschlossenen Gasraum des Aktors verbinden, wobei die Ausschnitte am Umfang des Zellenstapels zu dem Gasraum führende Kanäle bilden. Hierdurch wird ein guter Druckaufbau bzw. Druckabbau in dem von einem Balgorgan umschlossenen Gasraum erzielt.

Die Wärmeableitung aus den Zellen läßt sich dadurch verbessern, daß die Abstandhalter der Zellen dicht gegen das Gehäuse anliegen, welches den Zellenstapel aufnimmt.

Die Anordnung einer mit dem Elektrolyt getränkten Matrix hat den Vorteil, daß eine auch für einen Langzeiteinsatz ausreichende große Menge Elektrolyt zur Verfügung steht. Für einen reversiblen, gasbildenden bzw. gasverzehrenden elektrochemischen Reaktionsablauf können verschiedene Elektrodenpaarungen gewählt werden. Besonders geeignet sind Festkörperelektroden aus Silber oder Nickelhydroxid, denen eine gasbildende bzw. gasverzehrende Gegenelektrode aus einer Kohlenstoffmasse zugeordnet ist. Eine besonders einfach herzustellende, für die Stapelung und Anlage an die benachbarte Zelle besonders geeignete Gegenelektrode besteht aus einer Kohlenstoffmasse, die ein Bindemittel enthält und auf einem Streckmetall aufgebracht ist, welches eine Kontaktfläche zu einer nächstfolgenden Zelle bildet.

Ein Ausführungsbeispiel ist in der Zeichnung dargestellt; es zeigt
Fig. 1 einen elektrochemischen Aktor in einem Längsschnitt,
Fig. 2 zwei der im Aktor der Fig. 1 enthaltenen Zellen in einem Querschnitt,
Fig. 3 den Gegenstand der Fig. 2 in einer Draufsicht und
Fig. 4 eine den Zellen zugeordnete Gegenelektrode in einem Querschnitt und einem größeren Maßstab.

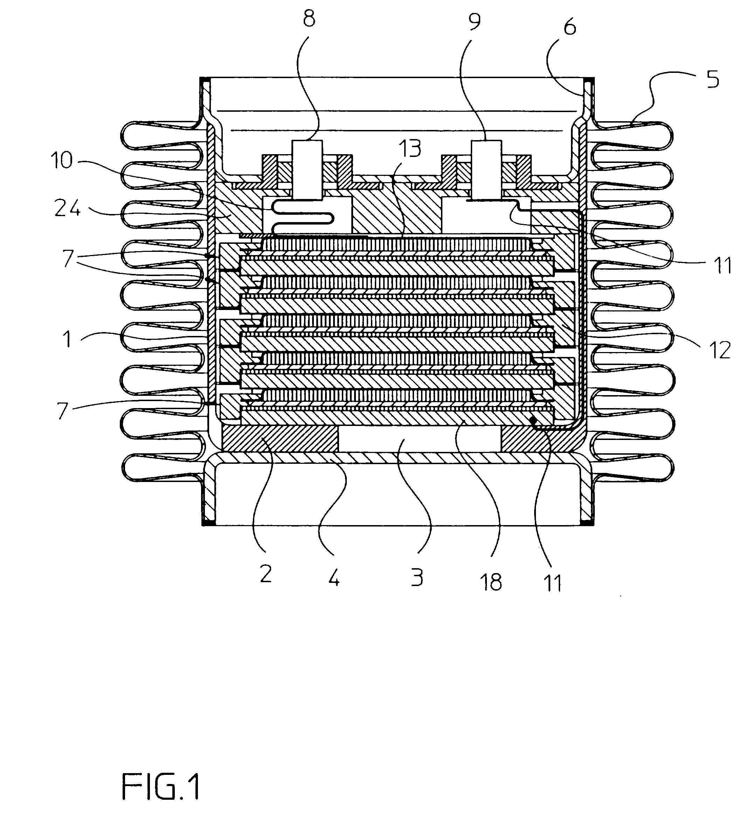

Der in Fig. 1 gezeigte elektrochmische Aktor besteht aus ei nem Gehäuse 1, dessen Boden 2 eine Öffnung 3 aufweist, einer Stellplatte 4 und einem metallischen Faltenbalg 5, der am Rand der Stellplatte 4 und an einem metallischen Deckel 6 befestigt ist.

In dem durch den Deckel 6 verschlossenen Gehäuse 1 ist ein aus elektrochemischen Zellen 7 bestehender Zellenstapel angeordnet. Ein in dem Deckel 6 angeordneter Polbolzen 8 ist über eine Stromleitung 10 mit dem Zellenbecher 13 der oberen Zelle 7 verbunden und ein weiterer Polbolzen 9 über eine Stromleitung 11, die in das aus Kunststoff bestehende Gehäuse 1 eingegossen sein kann, mit der Gegenelektrode 18 der unteren Zelle 7.

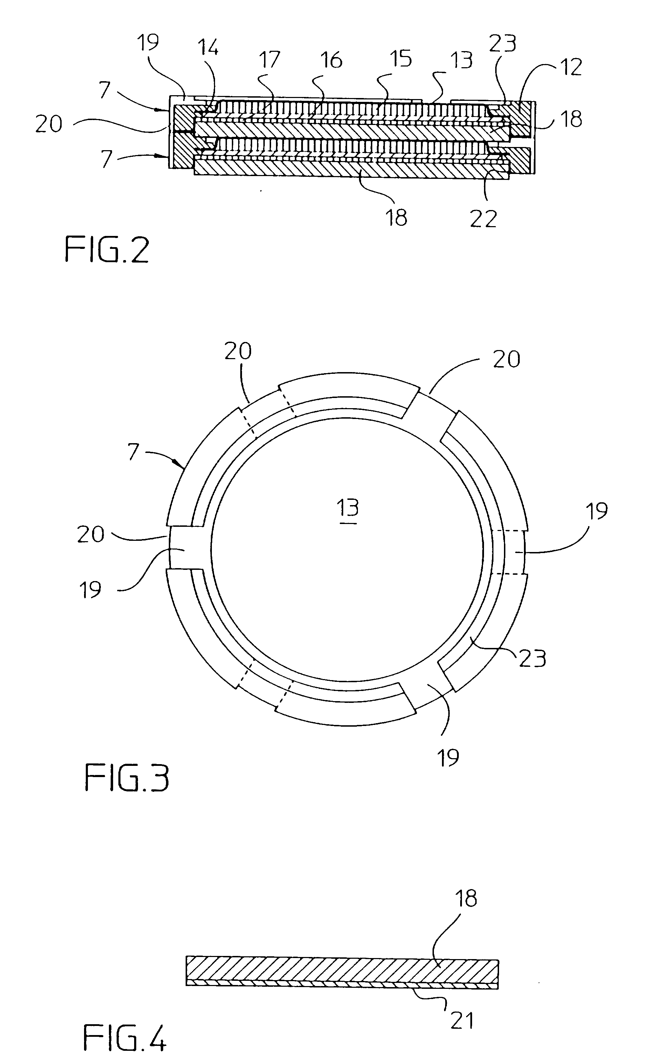

Jede Zelle 7 besteht, wie die Fig. 2 und 3 zeigen, aus einem ringförmigen Abstandhalter 12, einem Zellenbecher 13, einer mit Elektrolyt getränkten Matrix 15, einer Festkörperelektrode 16, einem Separator 17 und einer Gegenelektrode 18. Der Abstandhalter 12 besteht aus einem elektrisch isolierenden, gut wärmeleitenden Werkstoff, z. B. Oxidkeramik oder einer Kunststoffmasse, die einen gut wärmeleitenden, elektrisch nicht leitenden, pulverförmigen Zusatzstoff enthält, z. B. Aluminiumoxid, Titanoxid, Quarz o. dgl. Die Formgebung kann durch Spritzgießen erfolgen. Der metallische Zellenbecher 13 ist mit einem flachen Rand 14 in den Abstandhalter 12 eingeformt, ist also mit diesem fest verbunden. Die Matrix 15 zur Aufnahme eines Elektrolyten kann aus Fliesstoff, einer porösen Oxidkeramik o. dgl. bestehen. Die Festkörperelektrode 16 besteht aus einem oxidierbaren Stoff, z. B. Silber, Nickelhydroxid o. dgl., vorzugsweise in Form einer Sinterelektrode. Als gasbildende bzw. gasverzehrende Gegenelektrode 18 ist eine Kohlenstoffelektrode besonders geeignet. Sie besteht aus einer Kohlenstoffmasse, die ein Bindemittel, z. B. PTFE in einer Menge von 20 bis 40 Gew.% enthält und auf einem Streckmetall 21 aus Nickel, Edelstahl o. dgl. aufgebracht ist (vgl. Fig. 4). Der Zusammenbau der Zellen 7 geschieht in der Weise, daß in dem im Abstandhalter 12 befestigten Zellenbecher 13 zunächst die Matrix 15 eingelegt und darauf die Festkörperelektrode 16, der Separator 17 und die Gegenelektrode 18 gelegt werden. Die ringförmige Ausnehmung 22 im Abstandhalter 12 zur Aufnahme dieser Teile ist so tief, daß die Gegenelektrode 18 etwas aus dem Abstandhalter 12 herausragt und in eine Ausnehmung 23 des Abstandhalters 12 einer nächstfolgenden Zelle 7 eingreift. Beim Stapeln der Zellen greifen diese somit ineinander und sind gegen ein seitliches Verrutschen gesichert. Es besteht aber auch die Möglichkeit, die Zellen gegen seitliches Verrutschen dadurch zu sichern, daß die Abstandhalter an ihren Anlageflächen ineinandergreifende Vertiefungen und Vorsprünge aufweisen, wobei dann die Gegenelektrode nich hervorzustehen braucht. Im Stapel kommt die Gegenelektrode 18 mit ihrer von dem Streckmetall 21 gebildeten Kontaktfläche gegen den Zellenbecher 13 der nächstfolgenden Zelle 7 zur Anlage, so daß die Zellen 7 des Stapels in Reihe geschaltet sind.

Am Rand der gasbildenden Gegenelektrode 18 ist der Abstandhalter 12 mit radialen und axialen Ausschnitten 19 bzw. 20 versehen, welche zwischen den Gegenelektroden 18 und zur Öffnung 3 im Boden 2 und/oder zu dem vom Faltenbalg 5 und der Stellplatte 6 begrenzten Gasraum Verbindungskanäle bilden.

Wird an die Polbolzen 8,9 eine Gleichspannung angelegt, wobei der + Pol am Polbolzen 8 angeschlossen ist, wird das Metall der Festkörperelektrode 16 oxidiert und an der Gegenelektrode 18 Wasserstoff gebildet, der in dem geschlossenen Gasraum einen Gasdruck aufbaut, durch den die Stellplatte 4 von dem Gehäuse 1 weggedrückt wird. In umgekehrter Stromrichtung wird das Metalloxid der Festkörperelektrode 16 wieder reduziert und an der Gegenelektrode Wasserstoff oxidiert, was eine Abnahme des Gasdrucks und damit eine Rückbewegung der Stellplatte zur Folge hat. Die Vor- und Rückbewegung der Stellplatte kann für Regel- oder Steuervorgänge genutzt werden, z. B. zur Ventilsteuerung von Heizradiatoren.

Bedarfsweise läßt sich die Ableitung der entstehenden Wärme aus den Zellen 7 noch dadurch erhöhen, daß am Gehäuse 1 und/ oder Deckel 6 wärmeleitende Körper angebracht sind oder das Gehäuse 1 und der Deckel 6 selbst aus einem wärmeleitenden und elektrisch isolierenden Werkstoff bestehen. In Fig. 1 ist beispielsweise unter dem Deckel 6 ein Wärmeleitkörper 24 angeordnet.

## Patentansprüche

1. Elektrochemischer Aktor mit einem abgeschlossenen Gasraum und mehreren Zellen, von denen jede eine Festkörperelektrode (16) aus einem elektrochemisch reversibel oxidierbaren Stoff und eine Gegenelektrod (18) enthält, wobei durch einen reversiblen, von einem Gleichstrom hervorgerufenen elektrochemischen Reaktionsablauf in dem Gasraum ein in eine Bewegung umsetzbarer Druckaufbau oder Druckabbau bewirkt wird, dadurch gekennzeichnet, daß jede Zelle (7) mit einem stapelbaren rahmenförmigen Abstandhalter (12) aus einem elektrisch isolierenden, gut wärmeleitenden Werkstoff versehen ist, welcher den Rand (14) eines metallischen Zellenbechers (13), in dem eine mit Elektrolyt getränkte Matrix (15) angeordnet ist, sowie die Festkörperelektrode (16), einen Separator (17) und die Gegenelektrode (18) einfaßt, wobei in einem Stapel die Gegenelektrode (18) jeder Zelle (7) gegen den Zellenbecher (13) der nächstfolgenden Zelle (7) dicht zur Anlage kommt.

2. Elektrochemischer Aktor nach Anspruch 1, dadurch gekennzeichnet, daß die Gegenelektrode (18) etwas aus dem Abstandhalter (12) herausragt und in den Abstandhalter (12) der nächstfolgenden Zelle (7) eingreift.

3. Elektrochemischer Aktor nach Anspruch 1 oder 2, dadurch gekennzeichnet, daß der Abstandhalter (12) aus einer Kunststoffmasse besteht, die einen gut wärmeleitenden, elektrisch isolierenden, pulverförmigen Zusatzstoff enthält.

4. Elektrochemischer Aktor nach Anspruch 3, dadurch gekennzeichnet, daß der Zusatzstoff aus Aluminiumoxid, Titanoxid oder Quarz besteht.

5. Elektrochemischer Aktor nach einem der Ansprüche 1 bis 4, dadurch gekennzeichnet, daß der Abstandhalter (12) mit Ausschnitten (19,20) versehen ist, welche die Gegenelektrode der Zelle (7) mit dem Gasraum verbinden.

6. Elektrochemischer Aktor nach einem der Ansprüche 1 bis 5, dadurch gekennzeichnet, daß die Abstandhalter (12) der in einem Gehäuse (1) des Aktors angeordneten Zellen (7) dicht gegen das Gehäuse (1) anliegen.

7. Elektrochemischer Aktor nach einem der Ansprüche 1 bis 6, dadurch gekennzeichnet, daß die Matrix (15) aus einem synthetischen Fliesstoff besteht.

8. Elektrochemischer Aktor nach einem der Ansprüche 1 bis 7, dadurch gekennzeichnet, daß die Festkörperelektrode (16) aus Silber oder Nickelhydroxid besteht.

9. Elektrochemischer Aktor nach einem der Ansprüche 1 bis 8, dadurch gekennzeichnet, daß die Gegenelektrode (18) aus einer Kohlenstoffmasse besteht, die ein Bindemittel enthält und auf einem Streckmetall (21) aufgebracht ist, welches eine Kontaktfläche zu einer nächstfolgenden Zelle (7) bildet.

## Claims

1. An electrochemical actor comprising a closed gas chamber and a number of cells each containing a solid electrode (16), which consists of an electrochemically reversibly oxidisable substance, and a counter-electrode (18), the pressure increase or pressure reduction which is convertible into a movement being produced in the gas chamber by a reversible electrochemical reaction pattern produced by a direct current, characterised in that each cell (7) has a stackable frame-like spacer (12) made of an electrically insulating material which is a good heat conductor, spacer (12) holding the edge (14) of a metal cell housing (13), in which an electrolyte-impregnated matrix (15) is disposed, the solid electrode (16), a separator (17) and the counter-electrode (18), the counter-electrode (18) of each cell (7) of a stack engaging sealingly with the cell housing (13) of the immediately subsequent cell (7).

2. An electrochemical actor according to claim 1, characterised in that the counter-electrode (18) projects somewhat from the spacer (12) and engages in the spacer (12) of the next cell (7).

3. An electrochemical actor according to claim 1 or 2, characterised in that the spacer (12) is made of a plastic composition containing an electrically insulating powder additive which is a good heat conductor.

4. An electrochemical actor according to claim 3, characterised in that the additive is aluminium oxide or titanium oxide or quartz.

5. An electrochemical actor according to any of claims 1 to 5, characterised in that the spacer (12) is formed with cut-outs (19, 20) which connect the counter-electrode of the cell (7) to the gas chamber.

6. An electrochemical actor according to any of claims 1 to 5, characterised in that the spacers (12) of the cells (7) disposed in a casing (1) of the actor engage sealingly with the casing (1).

7. An electrochemical actor according to any of claims 1 to 6, characterised in that the matrix (15) is made of a synthetic flowable substance.

8. An electrochemical actor according to any of claims 1 to 7, characterised in that the solid electrode (16) is made of silver or nickel hydroxide.

9. An electrochemical actor according to any of claims 1 to 8, characterised in that the counter-electrode (18) is made of a carbon composition which contains a binder and which is applied to an expanded metal (21), the same serving as contact surface for a subsequent cell (7).

## Revendications

1. Acteur électrochimique comportant une chambre de gaz fermée et plusieurs piles, dont chacune contient une électrode (16) en matière solide, qui peut être oxydée électrochimiquement de manière réversible, et une électrode (18) antagoniste, un établissement ou une suppression d'un pression, qui peuvent être transformés en un mouvement, étant engendrés par un déroulement de réaction électrochimique dans la chambre de gaz provoqué par un courant continu, caractérisé en ce que chaque pile (7) est munie d'une entretoise (12) en forme de cadre qui peut être empilée, qui est en un matériau isolant électriquement et ayant une bonne conductibilité thermique et qui entoure le bord (14) d'un godet (13) de pile métallique, dans lequel est prévue une matrice (15) imprégnée d'électrolyte, ainsi que l'électrode (16) en matière solide, un séparateur (17) et l'électrode (18) antagoniste, l'électrode (18) antagoniste de chaque pile (7) venant, dans l'empilement, s'appliquer de manière étanche au godet (13) de la pile (7) immédiatement suivante.

2. Acteur électrochimique suivant la revendication 1, caractérisé en ce que l'électrode (18) antagoniste sort un peu de l'entretoise (12) et pénètre dans la pile (7) immédiatement suivante.

3. Acteur électrochimique suivant la revendication 1 ou 2, caractérisé en ce que l'entretoise (12) est en une composition de matière plastique qui contient un additif sous forme de poudre qui a une bonne conductibilité thermique et qui est isolant électriquement.

4. Acteur électrochimique suivant la revendication 3, caractérisé en ce que l'additif est en oxyde d'aluminium, en oxyde de titane ou en quartz.

5. Acteur électrochimique suivant les revendication 1 à 4, caractérisé en ce que l'entretoise (12) est muni de découpes (19, 20) qui relient l'électrode antagoniste de la pile (7) à la chambre de gaz.

6. Acteur électrochimique suivant les revendication 1 à 5, caractérisé en ce que les entretoises (12) des piles (7) montées dans un boîtier (1) de l'acteur s'appliquent de manière étanche au boîtier (1).

7. Acteur électrochimique suivant les revendication 1 à 6, caractérisé en ce que la matrice (15) est en une matière synthétique de coulée.

8. Acteur électrochimique suivant les revendication 1 à 7, caractérisé en ce que l'électrode (16) en matière solide est en argent ou en hydroxyde de nickel.

9. Acteur électrochimique suivant les revendication 1 à 8, caractérisé en ce que l'électrode (18) antagoniste est en une composition de carbone qui contient un liant et qui est déposée sur un métal (21) déployé qui forme une surface de contact avec une pile (7) immédiatement suivante.
